# EUROPEAN PATENT SPECIFICATION

(11) **EP 2 919 378 B1**
(45) Date of publication and mention of the grant of the patent: **02.09.2020**
(21) Application number: 13853483.9
(22) Date of filing: 03.07.2013
(51) Int. Cl.: H02P 6/18, H02P 6/15

(54) **SYNCHRONOUS MOTOR DRIVE SYSTEM**
SYNCHRONMOTORANTRIEBSSYSTEM
SYSTÈME DE PILOTAGE DE MOTEUR SYNCHRONE

(30) Priority: 09.11.2012 JP 2012247544
(43) Date of publication of application: 16.09.2015
(73) Proprietor: Hitachi Industrial Equipment Systems Co., Ltd., Chiyoda-ku Tokyo 101-0022 (JP)
(72) Inventor: TAKAHATA Ryoichi, Tokyo 100-8280 (JP); IWAJI Yoshitaka, Tokyo 100-8280 (JP); AOYAGI Shigehisa, Tokyo 100-8280 (JP); TOBARI Kazuaki, Tokyo 100-8280 (JP)
(74) Representative: Mewburn Ellis LLP
(86) International application number: PCT/JP2013/068252
(87) International publication number: WO 2014/073242

(56) References cited:
- GB-A- 2 281 459
- JP-A- H07 303 392
- JP-A- 2009 189 176
- US-A1- 2007 120 519
- US-A1- 2009 200 971
- YOSHITAKA IWAJI ET AL: "Position-sensorless control method at low speed for permanent magnet synchronous motors using induced voltage caused by magnetic saturation", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 June 2010 (2010-06-21), pages 2238-2243, XP031727499, ISBN: 978-1-4244-5394-8
- P.P. ACARNLEY ET AL: "Review of position-sensorless operation of brushless permanent-magnet machines", IEEE TRANSACTIONS ON INDUSTRIAL ELECTRONICS, vol. 53, no. 2, 1 April 2006 (2006-04-01), pages 352-362, XP055018619, ISSN: 0278-0046, DOI: 10.1109/TIE.2006.870868

## Description

### TECHNICAL FIELD

The present invention relates to a synchronous motor drive system, and more specifically, to a synchronous motor driving control system capable of realizing a high-performance control characteristic in a low velocity region.

### BACKGROUND ART

Small and high-performance permanent magnet motors (synchronous motors) are broadly used for motor drive systems used for household appliances, industrial apparatuses, automobiles, etc. However, in order to drive the permanent magnet motor (hereinafter, abbreviated as a PM motor), information on its rotor position of the PM motor is required, and a position sensor for it becomes indispensable. In recent years, "sensor-less control" of controlling a rotational frequency and a torque of the PM motor by removing this position sensor has spread widely.

By practical application of the sensor-less control, involved expenses of the position sensor (cost of the sensor itself, cost involved in wiring of the sensor, etc.) can be curtailed. Moreover, miniaturization of the system and use in rough environments become possible because of non-necessity of the sensor.

Currently, for the sensor-less control of the PM motor, there are adopted a method whereby an induced voltage (a velocity induced voltage) that occurs by a rotor rotating is detected directly and the PM motor is driven by using it as position information of the rotor, a method whereby the rotor position is estimated through calculation from a mathematical formula of the motor that becomes an object, etc.

A large problem of these sensor-less control systems is position detection accuracy at the time of a low velocity operation including a shutdown state (zero velocity). Now, since most of the sensor-less controls that are put in practical use is one that is based on the velocity induced voltage generated by the PM motor, its sensitivity declines at shutdown or in the low velocity region where the induced voltage is small and the position information is buried in noises.

There is Patent Literature 1 as a conventional method that solves this problem. Patent Literature 1 is a position sensor-less control system at the shutdown or in the low velocity region on the precondition that the PM motor is controlled by 120-degree energization, and the system switches energization phases based on a change of the induced voltage occurring in an open phase. This change of the induced voltage is a change of the induced voltage accompanying a change of a magnetic circuit inside the PM motor, and the system is based on a different principle from a conventional system that uses the velocity induced voltage resulting from a rotational speed. Therefore, the sensor-less control is realizable at the shutdown or in the low velocity region.

Moreover, there is Patent Literature 2 as a conventional example of a configuration that corrects a phase when switching the energization phase. Patent Literature 2 adopts an inverter of the conventional 120-degree energization drive method that uses the velocity induced voltage resulting from the rotational speed, and when switching the energization phase based on the velocity induced voltage arising in the open phase, in order to control the phase delay, it calculates a time of a reflux current occurring by energization switching, sets up so that this reflux current time may become a value corresponding to a predetermined rotational frequency (high velocity region), and thereby attains stabilization of the control.

Moreover, there is Patent Literature 3, which describes a driving apparatus of a synchronous motor that fixes all the switching devices of an inverter at OFF in accordance with a value of an all-OFF control pulse signal outputted by a pulse generator. A motor current keeps flowing through free wheel diodes for a predetermined period even after all the switching devices shift to the OFF state. Therefore, pulse generator changes an induced voltage detection signal to an H (high) level after the passage of the time in which a motor current drops down to zero. A terminal voltage of the motor is taken in to acquire an induced voltage and a rotor position is estimated.

### CITATION LIST

### PATENT LITERATURE

PATENT LITERATURE 1: Japanese Patent Application Laid-Open No. 2009-189176
PATENT LITERATURE 2: Japanese Patent Application Laid-Open No. 2005-204383
PATENT LITERATURE 3: United States Patent Application Publication No. US 2007/0120519 A1.

### SUMMARY OF INVENTION

### TECHNICAL PROBLEM

However, for example, by the invention of Patent Literature 1, it is possible to obtain excellent control performance in a stop of a PM motor or in a low velocity region. However, since in the use of the load torque being large or when a motor of a large inductance is used, an influence of a magnetic flux (q-axis magnetic flux) by a torque current becomes large, and therefore an error occurs in a threshold value of an open phase induced voltage, a voltage phase progresses, and a power factor declines. As a result, it is impossible to control the PM motor to be in high torque and in high performance.

Moreover, in the invention of Patent Literature 2, although it is possible to control the phase delay depending on a running speed by considering an energization time of the reflux current when switching energization phases, it can control it only in a range of 30°. Moreover, in the low velocity region where the induced voltage is small, since sensitivity declines and position information is buried in noises, the torque characteristic deteriorates.

The present invention was made in view of these problems, and provides a drive system of the PM motor capable of realizing a high-performance control characteristic in the low velocity region.

### SOLUTION TO PROBLEM

In order to solve the above-mentioned problems, the present invention provides a synchronous motor drive system as set out in claim 1. Further aspects of the invention are set out in the remaining claims.

### ADVANTAGEOUS EFFECTS OF INVENTION

Since the present invention has the above configuration, it can provide the drive system of the PM motor that can realize the high-performance control characteristic in the low velocity region.

### BRIEF DESCRIPTION OF DRAWINGS

Figure 1 is a diagram for explaining a drive system of a synchronous motor according to a first embodiment.
Figure 2 is a diagram for explaining an energization mode.
Figure 3 is a diagram showing an induced voltage that appears in a non-energization phase when a rotor position is changed.
Figure 4 is a diagram for explaining changeover of two phases that are energized according to a rotor phase angle θ_{d}.
Figure 5 is a diagram showing a relationship between the energization mode and the induced voltages of the energization phase and the non-energization phase.
Figure 6 is a diagram for explaining a reference level switch 9 for generating a reference voltage (a threshold value) that is to be compared with the induced voltage of the non-energization phase of the synchronous motor.
Figure 7 is a vector diagram of the synchronous motor according to a conventional technology.
Figure 8 is a diagram for explaining phase compensation of the drive system of the synchronous motor.
Figure 9 is a diagram showing a measurement result of a current waveform flowing in the synchronous motor.
Figure 10 is a diagram for explaining a second embodiment.
Figure 11 is a diagram for explaining a third embodiment.
Figure 12 is a diagram for explaining a fourth embodiment.

### DESCRIPTION OF EMBODIMENTS

Hereinafter, embodiments of the present invention will be described referring to accompanying drawings.

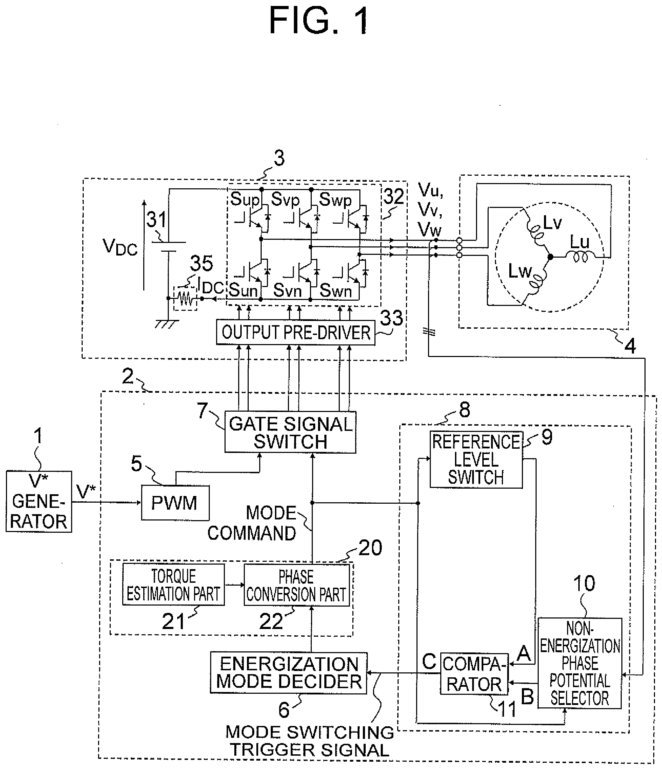

Fig. 1 is a diagram for explaining a drive system of a synchronous motor according to a first embodiment.

As shown in Fig. 1, the drive system of the synchronous motor of this embodiment includes: a PM motor 4 that becomes a controlled object; a V* generator 1 for generating a command V* of an applied voltage to be applied to the PM motor 4; a power converter (inverter) 3 that is coupled with the PM motor 4 and is comprised of multiple switching elements; and a controller 2 for controlling the PM motor 4 by outputting a voltage command to this inverter 3. The controller 2 selects two phases among three-phase winding of the PM motor 4, and applies positive or negative pulse voltages thereto. Moreover, it includes means (a mode switching trigger generator 8) for estimating a phase (a magnetic pole position of a rotor) and a velocity based on an open phase induced voltage at the time of application of the positive or negative pulse.

Moreover, the inverter 3 includes a DC power supply 31 for supplying electric power to the inverter, an inverter main circuit part 32 having six switching elements Sup to Swn, and an output pre-driver 33 for directly driving the inverter main circuit 3.

The V* generator 1 generates an applied voltage command V* destined to the PM motor 4. By pulse width modulation (PWM), the controller 2 applies a voltage equivalent to the command V* to the PM motor 4.

That is, in the controller 2, a 120-degree energization wave whose pulse width is modulated is formed by a PWM generator 5 based on the output of the V* generator 1. In an energization mode decider 6, a mode command representing one mode among six switching modes that the inverter main circuit part performs is outputted sequentially.

A gate signal switch 7 decides in what kind of operation each switching element of the inverter main circuit part performs switching based on the mode command, and eventually outputs six gate pulse signals to the inverter 3 one by one.

Moreover, the energization mode decider 6 switches the energization mode with a signal that the mode switching trigger generator 8 generates.

The mode switching trigger generator 8 has: a reference level switch 9 for generating a threshold value that serves as a comparison criterion of the induced voltage in a non-energization phase of the PM motor 4; a non-energization phase potential selector 10 for selecting the non-energization phase from the three-phase terminal voltages of the PM motor 4 based on the mode command; and a comparator 11 for generating a mode switching trigger by comparing an output of the non-energization phase potential selector 10 with the threshold value.

Thus, in the inverter 3 of a 120-degree energization method, two phases are selected from among the three-phase winding of the PM motor, and voltages are applied thereon to generate the torque. In doing this, six kinds of combinations of the two phases exist, and they are defined as energization modes 1 to 6, respectively.

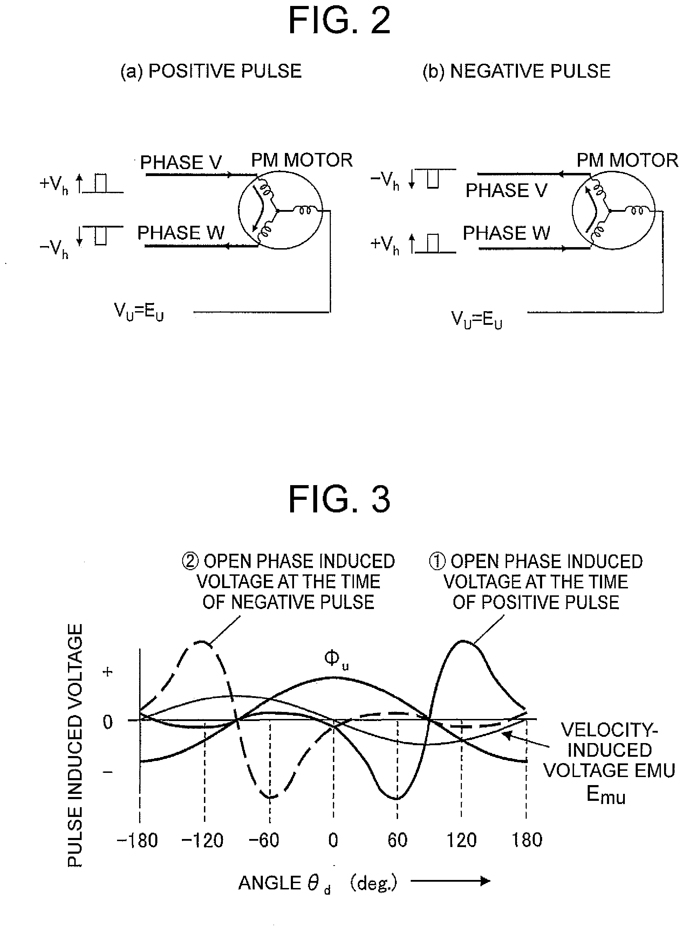

Fig. 2 is a diagram for explaining the energization mode, Fig. 2 (a) shows a mode 3 in which energization is established from a phase V to a phase W, and Fig. 2 (b) shows a state in which energization is established from the phase W to the phase V.

Fig. 3 is a diagram showing the induced voltage that appears in the non-energization phase when an angle of a rotor position is changed by one cycle of an electric angle. Referring to these diagrams, it is found that the induced voltage of a phase U varies depending on the rotor position.

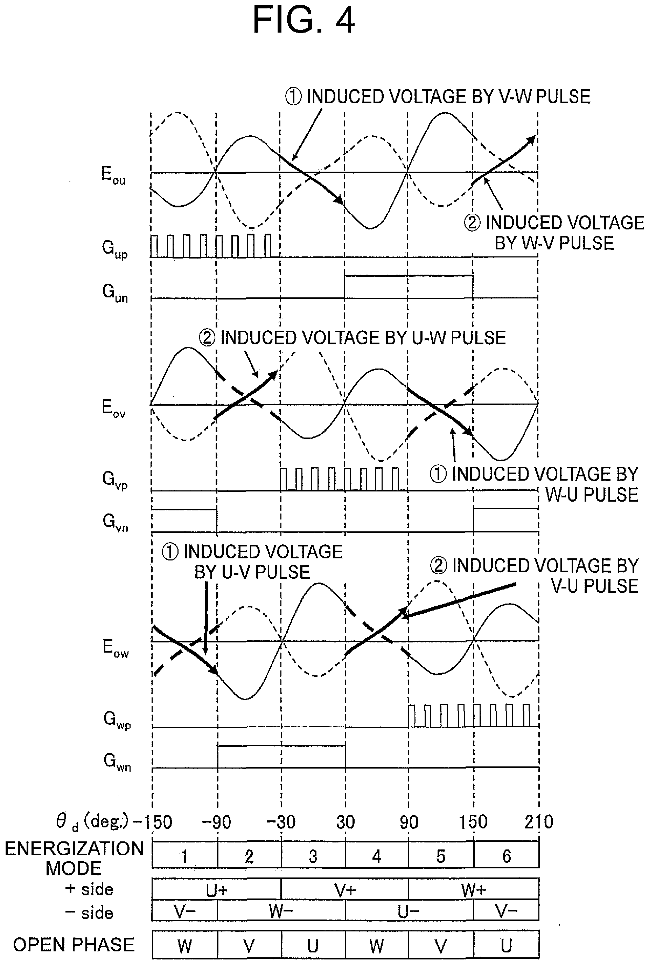

Here, the induced voltage is not a velocity induced voltage, but is a difference, observed in the phase U, between rates of change of magnetic fluxes that interlink armature winding of the phase V and the phase W. Therefore, even in the case of stop or in a low velocity region, the induced voltage corresponding to the rotor position can be observed. Incidentally, the voltage pulses shown in Figs. 2 (a), (b) are applied during normal operation in an inverter of the 120-degree energization method. Fig. 4 shows induced voltages Eₒᵤ to E_{ow} of the phase U to the phase W, gate signals Gᵤₚ to G_{wn} of an inverter 2, a rotor phase angle θ_{d} of the PM motor, and the energization mode. As shown in the diagram, two phases that are energized are switched by every 60° corresponding to the rotor phase angle θ_{d}.

Incidentally, the mode 3 and the mode 6 in Fig. 4 are equivalent to the states of Figs. 2 (a), (b), respectively. The induced voltage of the phase U at this time becomes like a solid arrow on the Eₒᵤ when it is drawn together with Fig. 3. That is, in the mode 3, the induced voltage is observed that decreases in a minus direction; and in the mode 6, the induced voltage is observed that increases in a plus direction.

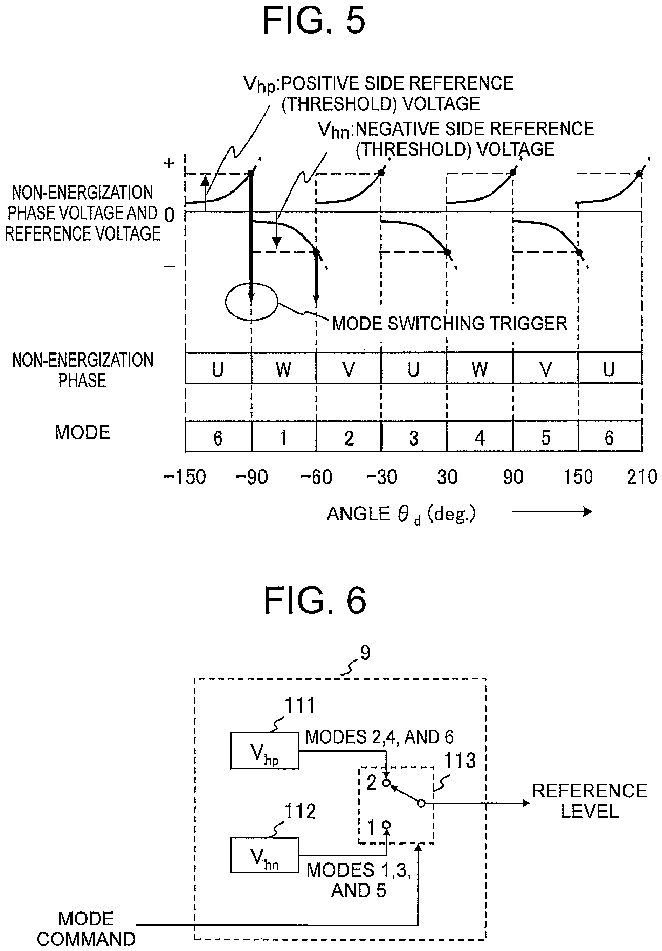

Fig. 5 is a diagram showing a relationship between the energization mode with respect to the non-energization phase and the induced voltage of the non-energization phase. It turns out that whenever the energization mode switches, the induced voltage switches to positive or negative and each of them repeats a rise and a fall, respectively. Then, reference voltages (Vₕₚ, Vₕₙ) are set up on the positive side and on the negative side, respectively, and a trigger signal for mode switching can be generated from a magnitude relationship of the reference voltages and the induced voltage.

Fig. 6 is a diagram showing a structure of the reference level switch 9 for generating a reference voltage (a threshold value) that is to be compared with the non-energization phase induced voltage of the synchronous motor.

The reference level switch 9 includes a positive side reference voltage setter 111, a negative side reference voltage setter 112, and a changeover switch 113. When the mode commands are 1, 3, and 5, the changeover switch is switched to the 1 side and the threshold value is set to Vₕₚ; when the mode commands are 2, 4, and 6, the changeover switch is switched to the 2 side and the threshold value is set to Vₕₙ.

The comparator 11 compares this threshold value and a size of the induced voltage of the non-energization phase, and generates the trigger signal of the mode switching.

According to this embodiment, a suitable motor driving torque can be obtained according to a rotary position of the rotor. Here, since the induced voltage of the non-energization phase is not caused by the velocity induced voltage as shown in Patent Literature 2 but is a transformer induced voltage, it can be detected with sufficient sensitivity even in an extremely low velocity state.

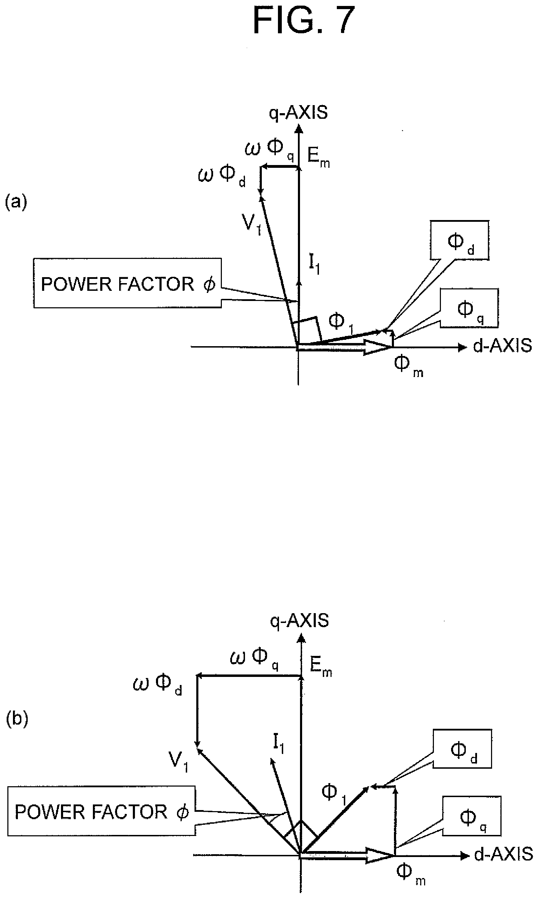

Fig. 7 is a vector diagram of the synchronous motor according to a conventional technology.

In Fig. 7, (a) is a vector diagram at the time of low torque, and (b) is a vector diagram at the time of high torque.

Since at the time of the low torque shown in Fig. 7 (a), phases of a main magnetic flux Φ₁ of the PM motor and of a magnetic flux Φₘ of a permanent magnet do not deviated from each other largely, it is possible to drive the PM motor stably even by the method of the conventional technology.

However, the main magnetic flux Φ₁ of the PM motor deviates largely from Φₘ at the time of the high torque shown in Fig. 7 (b). For this reason, if the mode is switched based on the main magnetic flux Φ₁, the current will undergo phase advance, a power factor will be deteriorated, a torque of the PM motor will decline, and the control system will be unstable.

For this reason, in order to improve the power factor of the motor and attain high torque, processing of delaying the timing of switching the two phases that are energized according to the torque is needed. Thereby, in the low velocity region, the PM motor can be controlled to be in high torque and high performance.

Here, in this embodiment, when driving the synchronous motor by the 120-degree energization method in the low velocity region, namely, when switching the two phases that are energized based on the induced voltage of the open phase occurring at the time of application of the pulses, the synchronous motor is driven with the timing of switching changed according to a generated torque of the PM motor or a quantity of state equivalent to the generated torque.

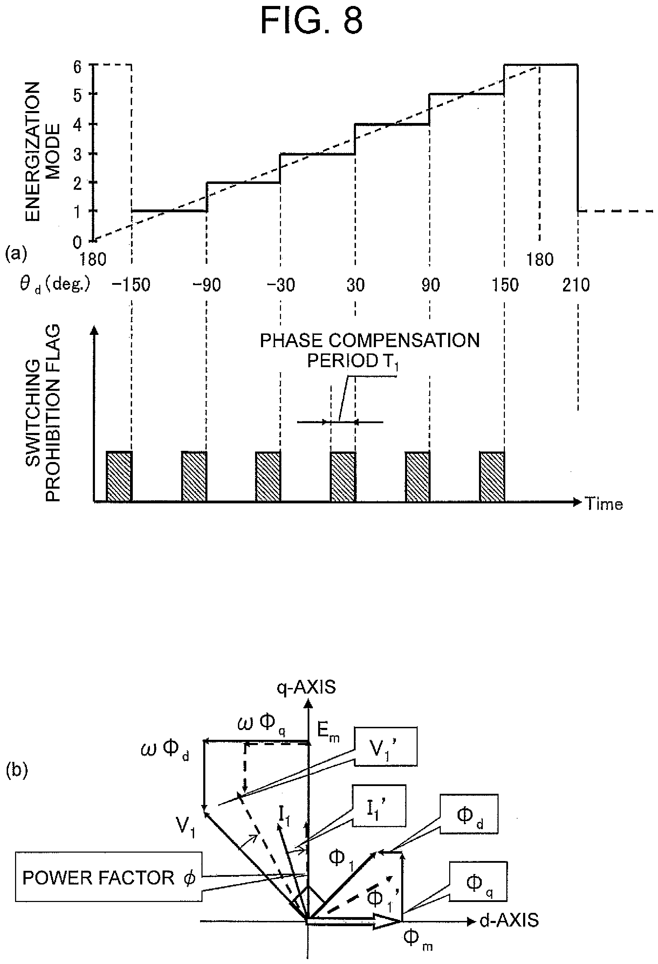

Fig. 8 is a diagram for explaining phase compensation of the drive system of the synchronous motor.

In the case where a phase compensator 20 (Fig. 1) is used for the processing of delaying the timing of switching the two phases that are energized according to the torque, a torque estimation part 21 estimates the torque of the motor based on the current of the motor or a DC bus bar current of the inverter, and a phase conversion part 22 calculates the amount of phase compensation based on the estimated torque. Moreover, the phase conversion part decides timing of switching the two phases that are energized (a phase compensation period) based on the calculated value. That is, it delays the mode switching by a phase compensation period T₁ shown in Fig. 8 (a). That is, the phase conversion part establishes a mode determination flag and sets up a switching prohibition period based on this flag value.

When the switching prohibition period has been set up in this way, a relationship between the voltage and the current becomes a relationship between voltage V₁' and I₁' as shown in Fig. 8 (b), and a phase shift between the main magnetic flux Φ₁ and the magnetic flux Φₘ of the permanent magnet is improved. That is, under a condition of a heavy load or an inductance of the motor being large, when operating the inverter of the 120-degree energization method in the low velocity region, the power factor can be improved. Moreover, the decline of the torque can be suppressed in this occasion and it becomes possible to control the PM motor to be in the high torque and high performance.

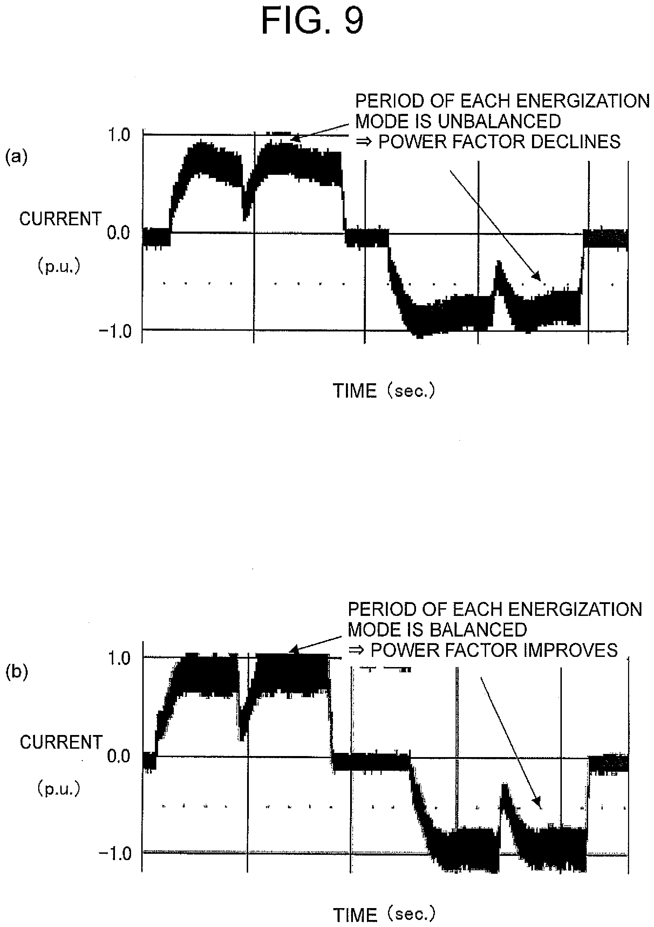

Fig. 9 shows a measurement result of a current waveform flowing in the synchronous motor. In the diagram, Fig. 9 (a) is a phase current waveform of the synchronous motor in the conventional technology. As shown in the diagram, the phase advance occurs, a period of each energization mode becomes nonuniform, and the power factor also declines. Fig. 9 (b) shows a phase current waveform in the synchronous motor according to this embodiment. As shown in the diagram, by delaying the phase, the period of each energization mode becomes uniform, and the power factor also improves. Incidentally, Fig. 9 shows a root square mean value of the current in the case of testing the synchronous motor of this embodiment that is standardized to be 1.0 p.u. According to this embodiment, the diagram shows that it is possible to make the period of each energization mode uniform, to improve the phase advance of the current waveform and a distortion factor of the synchronous motor, and to improve the power factor during 120-degree energization.

As explained above, according to the synchronous motor drive system of this embodiment, in the low velocity region or in the case of a high load or the inductance of the motor being large, it is possible to attain stabilization of a control characteristic by the improvement of the power factor, which can realize the control characteristic of the high torque and high performance.

### <Second embodiment>

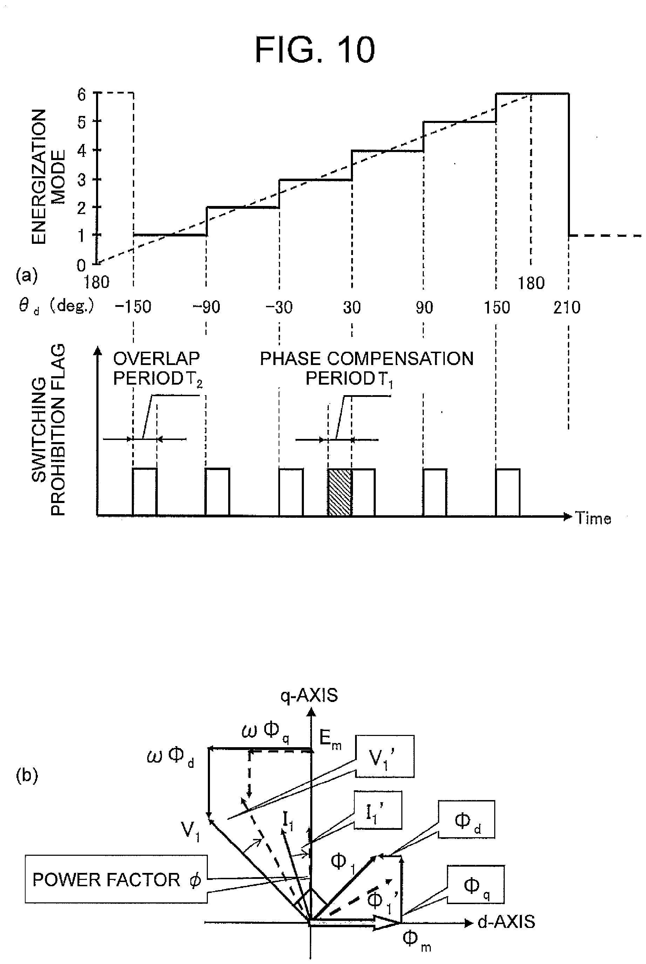

Fig. 10 is a diagram for explaining a second embodiment of the present invention. When driving by the 120-degree energization method, an overlap period of energization phases occurs after the switching of the energization modes. For this reason, there is a possibility that a phase estimation result may contain an error in the overlap period.

For this reason, in the overlap period of the energization modes after the switching of the modes, a mode switching prohibition flag is provided so that phase estimation may be prohibited, and the phase estimation and the mode switching are prohibited. Incidentally, the overlap period of the energization phases can be estimated based on the velocity or an electrical time constant of the synchronous motor. Also in the drive system of the synchronous motor configured in this way, it is possible to improve the phase advance of the current waveform and the distortion factor of the synchronous motor, which makes it possible to improve the power factor during 120-degree energization.

### <Third embodiment>

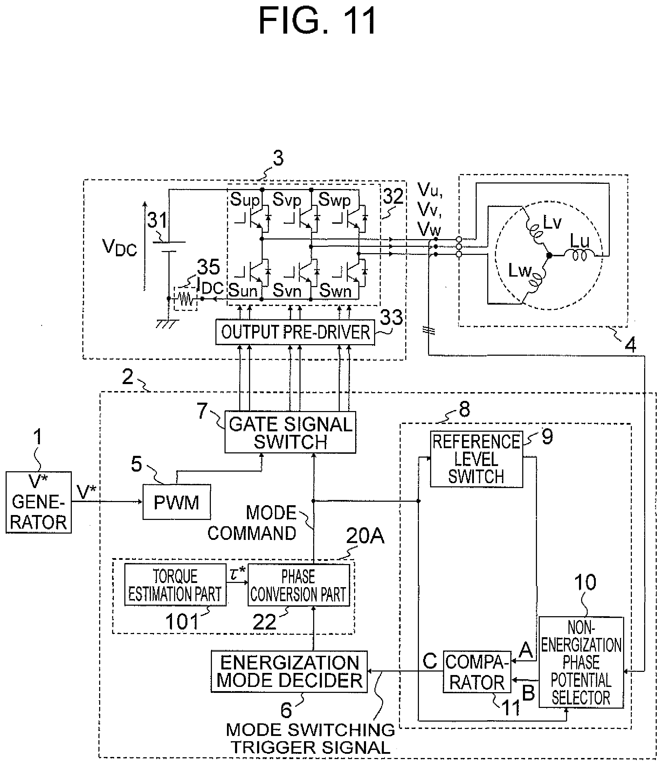

Fig. 11 is a diagram for explaining a third embodiment. Incidentally, in the diagram, the same portions as those shown in Fig. 1 are attached the same reference symbols and their explanations are omitted. In this embodiment, a torque command value τ* from a torque instructor 101 is directly inputted into the phase conversion part 22 of a phase compensator 20A, and a response of the control is improved.

Incidentally, even in the drive system of the synchronous motor configured in this way, it is possible to improve the phase advance and the distortion factor of the current waveform of the synchronous motor, which make it possible to improve the power factor during 120-degree energization. For this reason, also in this embodiment, the same effect as that of Fig. 1 can be attained.

### <Fourth embodiment>

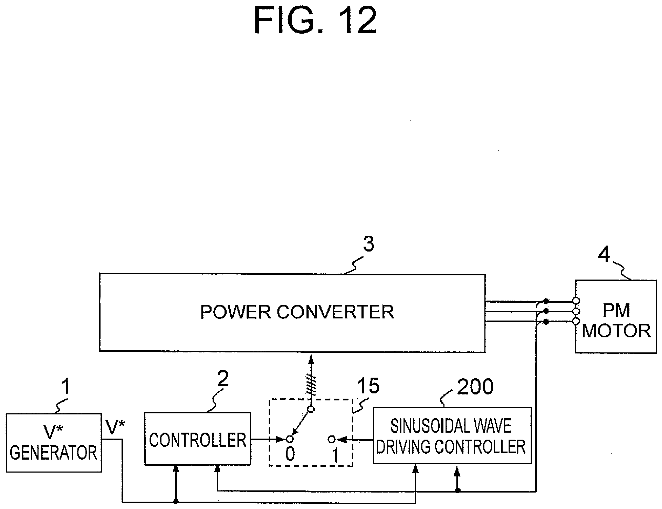

Fig. 12 is a diagram for explaining a fourth embodiment. In this embodiment, the drive system of the synchronous motor is configured so that a sinusoidal wave driving controller 200 and the controller 2 according to the embodiment of the present invention may be switched by a switch 15 according to a rotational speed region (the controller 2 side is operated at the time of activation, and the sinusoidal wave driving controller 200 side is operated after acceleration).

That is, although the embodiments explained so far are based on the synchronous motor drive system that is of the 120-degree energization method and of the position sensor-less system, currently, a mainstream of the drive system of the PM motor is shifting to a 180-degree energization method by a sinusoidal current. However, position estimation in an extremely low velocity is difficult in the 180-degree energization method. Therefore, it can be concluded that a system is desirable in which a drive system that is of the 120-degree energization method and of the position sensor-less system is used at the time of activation and is switched to the sinusoidal wave driving of the 180-degree energization method at a time point when it is accelerated to some extent. That is, according to this embodiment, it is possible to further enhance completeness of the drive system of the PM motor. Incidentally, even in the drive system configured in this way, it is possible to improve the phase advance and the distortion factor of the current waveform of the synchronous motor, which makes it possible to improve the power factor during 120-degree energization.

As described above, according to the embodiment of the present invention, the control system includes: the synchronous motor; a power converter (inverter) that is comprised of multiple switching elements coupled to this synchronous motor; a controller for controlling the synchronous motor by outputting the voltage command to this inverter; means for detecting a current of the synchronous motor; and means for detecting a load torque of the synchronous motor, in which this controller selects two phases to be energized among the three-phase winding of the synchronous motor, applies pulse voltages to them, detects the open phase induced voltage at the time of pulse application, and switches the two phases that are energized based on the detected open phase induced voltage. Moreover, when switching the two phases that are energized, its timing is changed according to the generated torque or the quantity of state equivalent to the generated torque of the synchronous motor.

Moreover, the timing of switching the two phases that are energized is changed based on a current flowing in the synchronous motor, or the DC bus bar current of the power converter, or a value equivalent to those commands as the quantity of state equivalent to the generated torque. Moreover, when switching the timing of switching the two phases that are energized, the larger the generated torque or the quantity of state equivalent to the generated torque becomes, the more greatly the timing of switching is made to be delayed. Thereby, in the low velocity region, or in the case of the high load or the inductance of the motor being large, it is possible to improve the power factor and to stabilize the control characteristic, which enables the synchronous motor to be controlled to be in the high torque and high performance. Incidentally, although the PM motor was taken as an example and was explained as the synchronous motor becoming the controlled object, the same effect can be obtained with other synchronous motors (for example, one that uses field winding for the rotor, or a motor driven by reluctance torque, etc.).

Incidentally, the present invention is not limited to the above-mentioned embodiments, but includes various modifications. For example, the above-mentioned embodiments are explained in detail in order to explain the present invention intelligibly, and are not necessarily limited to one that includes all the constituents having been explained.

Moreover, a part of the configuration of a certain embodiment can be substituted with a configuration of another embodiment, and the configuration of another embodiment can be added to the configuration of the certain embodiment. Moreover, it is possible to add, delete, or substitute another constituent for a part of the configuration of each embodiment. Moreover, a part or all of the above-mentioned configuration, the function, the processing part, the processing means, etc. may be realized with hardware by, for example, designing them with an integrated circuit. Moreover, each of the above-mentioned configuration, function, etc. may be realized with software by a processor interpreting a program that realizes each function and executing it. Information of the program that realizes each function, files, etc. can be put on recording devices such as memory, a hard disk drive, an SSD (SoLid State Drive), or on recording media such as an IC card, an SD card, and a DVD. Moreover, regarding the control line and the information line, ones that are considered necessary on explanation are shown, and all the control lines and information lines on the product are not necessarily shown. Practically, it may be considered that almost all the constituents are coupled to a phase E.

### REFERENCE SIGNS LIST

1... V* generator,
2... Controller (Inverter),
3... Power converter (Inverter),
4... Synchronous motor (PM motor),
5... PWM generator,
6... Energization mode decider,
7... Gate signal switch,
8... Mode switching trigger generator,
9... Reference level switch,
10... Non-energization phase potential selector,
11... Comparator,
15, 113... Changeover switch,
20, 20A... Phase compensator,
21... Torque estimation part,
22... Phase conversion part,
31... DC power supply,
32... Inverter main circuit part,
33... Output pre-driver,
35... Shunt resistance,
101... Torque instructor,
111, 112... Reference level setter,
200... Sinusoidal wave driving controller (180-degree energization method).
1... V* generator,
2... Controller (Inverter),
3... Power converter (Inverter),
4... Synchronous motor (PM motor),
5... PWM generator,
6... Energization mode decider,
7... Gate signal switch,
8... Mode switching trigger generator,
9... Reference level switch,
10... Non-energization phase potential selector,
11... Comparator,
15, 113... Changeover switch,
20, 20A... Phase compensator,
21... Torque estimation part,
22... Phase conversion part,
31... DC power supply,
32... Inverter main circuit part,
33... Output pre-driver,
35... Shunt resistance,
101... Torque instructor,
111, 112... Reference level setter,
200... Sinusoidal wave driving controller (180-degree energization method).

## Claims

1. A synchronous motor drive system, comprising:
a power converter (3) that generates an AC voltage by sequentially switching a plurality of switching elements and supplies it to a three-phase winding synchronous motor (4);
a detector for detecting a release voltage of a phase of the synchronous motor to which no pulsed output is supplied, when supplying pulsed outputs of two phases that are energized by the power converter (3) to two phases of the synchronous motor (4); and
a torque detection part (21) for detecting or estimating a load torque of the synchronous motor (4);
a controller (2) for sequentially switching the two phases that are energized according to the detected release voltage in accordance with a predetermined energization mode,
wherein the controller (2) delays timing of switching the two phases according to the detected or estimated load torque of the synchronous motor (4), **characterised in that** the larger the load torque is, the larger the delay quantity of timing of switching the two phases is set.

2. The synchronous motor drive system according to claim 1,
wherein the load torque is estimated based on a current flowing in the synchronous motor (4), a current flowing in a DC bus bar of the power converter (3), or a torque command value.

3. The synchronous motor drive system according to claim 1,
wherein an overlap period of an energization phase of the power converter (3) after switching of the energization mode is set up based on a velocity of the synchronous motor (4) or an electric time constant, and during the period switching of the two phases that are energized is prohibited.

4. The synchronous motor drive system according to claim 1,
wherein the power converter (3) activates an energization period of an arm formed with switching elements of which the converter is comprised by a 120-degree energization method that energizes it by 120 degrees at the time of activation and
subsequently switches the method to a 180-degree energization method that energizes it by 180 degrees.

## Patentansprüche

1. Synchronmotorantriebssystem, das Folgendes umfasst:
einen Leistungswandler (3), der eine Wechselspannung erzeugt, in dem er nacheinander eine Vielzahl von Schaltelementen schaltet, und diese einem Dreiphasenwicklungssynchronmotor (4) zuführt;
einen Detektor zur Detektion einer Auslösespannung einer Phase des Synchronmotors, welche mit keiner gepulsten Ausgangsleistung versorgt wird, wenn zwei Phasen des Synchronmotors (4) mit gepulsten Ausgangsleistungen von zwei Phasen versorgt werden, die durch den Leistungswandler (3) bestromt werden; und
ein Drehmomentdetektionsteil (21) zur Detektion oder Schätzung eines Lastdrehmoments des Synchronmotors (4);
eine Steuervorrichtung (2), um die beiden Phasen, die gemäß der detektierten Auslösespannung gemäß einem vorbestimmten Bestromungsmodus bestromt werden, nacheinander zu schalten,
wobei die Steuervorrichtung (2) die Zeitgebung des Schaltens der zwei Phasen gemäß dem detektierten oder geschätzten Lastdrehmoment des Synchronmotors (4) verzögert, **dadurch gekennzeichnet, dass**:
je höher das Lastdrehmoment ist, desto größer das Verzögerungsausmaß der Zeitgebung des Schaltens der zwei Phasen eingestellt wird.

2. Synchronmotorantriebssystem nach Anspruch 1,
wobei das Lastdrehmoment auf Grundlage eines Stroms, der in dem Synchronmotor (4) fließt, eines Stroms, der in einer Gleichstromsammelschiene des Leistungswandlers (3) fließt, oder eines Drehmomentbefehlswerts geschätzt wird.

3. Synchronmotorantriebssystem nach Anspruch 1,
wobei eine Überlappungszeitspanne einer Bestromungsphase des Leistungswandlers (3) nach dem Schalten des Bestromungsmodus auf Grundlage einer Drehzahl des Synchronmotors (4) oder einer elektrischen Zeitkonstante festgelegt wird und während der Zeitspanne das Schalten der zwei Phasen, die bestromt werden, nicht zulässig ist.

4. Synchronmotorantriebssystem nach Anspruch 1,
wobei der Leistungswandler (3) eine Bestromungszeitspanne eines mit den Schaltelementen, aus welchen der Wandler besteht, gebildeten Zweigs durch ein 120-Grad-Bestromungsverfahren aktiviert, das diesen zum Zeitpunkt der Aktivierung mit 120 Grad bestromt, und
anschließend das Verfahren auf ein 180-Grad-Bestromungsverfahren umschaltet, das mit 180 Grad bestromt.

## Revendications

1. Système d'entraînement de moteur synchrone, comprenant :
un convertisseur de puissance (3) qui génère une tension alternative, CA, en commutant séquentiellement une pluralité d'éléments de commutation et l'alimente vers un moteur synchrone à enroulement triphasé (4) ;
un détecteur permettant de détecter une tension de relâchement d'une phase du moteur synchrone à laquelle aucune sortie pulsée n'est fournie, lors de l'alimentation de sorties pulsées de deux phases qui sont mises sous tension par le convertisseur de puissance (3) à deux phases du moteur synchrone (4) ; et
une partie de détection de couple (21) permettant de détecter ou estimer un couple de charge du moteur synchrone (4) ;
un dispositif de commande (2) pour commuter séquentiellement les deux phases qui sont mises sous tension selon la tension de relâchement détectée selon un mode de mise sous tension prédéterminé,
dans lequel le dispositif de commande (2) retarde une synchronisation de commutation des deux phases en fonction du couple de charge détecté ou estimé du moteur synchrone (4), **caractérisé en ce que**
plus le couple de charge est grand, plus la quantité de retard de synchronisation de commutation des deux phases est grande.

2. Système d'entraînement de moteur synchrone selon la revendication 1,
dans lequel le couple de charge est estimé sur la base d'un courant circulant dans le moteur synchrone (4), d'un courant circulant dans une barre omnibus de courant continu, CC, du convertisseur de puissance (3), ou d'une valeur d'instruction de couple.

3. Système d'entraînement de moteur synchrone selon la revendication 1,
dans lequel une période de chevauchement d'une phase de mise sous tension du convertisseur de puissance (3) après une commutation du mode de mise sous tension est établie sur la base d'une vitesse du moteur synchrone (4) ou d'une constante de temps électrique, et pendant la période, une commutation des deux phases qui sont mises sous tension est interdite.

4. Système d'entraînement de moteur synchrone selon la revendication 1,
dans lequel le convertisseur de puissance (3) active une période de mise sous tension d'un bras formé d'éléments de commutation dont le convertisseur est constitué d'un procédé de mise sous tension à 120 degrés qui le met sous tension de 120 degrés au moment de l'activation, et
commute ensuite le procédé vers un procédé de mise sous tension à 180 degrés qui le met sous tension de 180 degrés.
